# EUROPEAN PATENT APPLICATION

(11) **EP 3 712 394 A1**
(43) Date of publication of application: **23.09.2020**
(21) Application number: 20162663.7
(22) Date of filing: 12.03.2020
(51) Int. Cl.: F01D 25/16, F01D 25/18, F01D 25/12, F02C 7/06, F02C 7/18

(54) **A GAS TURBINE BEARING SUPPORT STRUCTURE**

(30) Priority: 20.03.2019 GB 201903782
(71) Applicant: Rolls-Royce plc, London N1 9FX (GB)
(72) Inventor: Mason, David, Derby, Derbyshire DE24 8BJ (GB); Wilson, Paul, Derby, Derbyshire DE24 8BJ (GB); Popovic, Ivan, Derby, Derbyshire DE24 8BJ (GB)
(74) Representative: Rolls-Royce plc

(57) **Abstract**

A gas turbine engine (10) having a bearing support structure (100) comprising:
a bearing chamber (104);
a first buffer fluid passage (110) disposed radially outwardly of the bearing chamber (104);
a second buffer fluid passage (116) disposed radially outwardly of the first buffer fluid passage (110); and
a core fluid passage (132) disposed radially outwardly of the second buffer fluid passage (116); the bearing chamber (104), first buffer fluid passage(110), second buffer fluid passage (116) and core fluid passage (132) being separated by respective hub walls.

## Description

The present disclosure relates to a bearing support structure for a gas turbine engine, and particularly but not exclusively relates to a bearing support structure comprising two buffer fluid passages.

### Background

A gas turbine engine comprises a number of bearings along its length. These bearings, housed in bearing chambers, precisely centre the rotors whilst allowing them to freely rotate. Each bearing chamber forms part of a bearing support structure, which supports the rotating components of the gas turbine engine and transmits radial bearing loads to the outer casing of the engine.

Bearing chambers contain oil to lubricate the bearings, with the optimum temperature of the oil typically being less than 200 °C. Escalation of the oil temperature above this point can have a number of undesirable effects. Above 230 °C, the flow properties of the oil begin to deteriorate, and deposits may begin to form within the bearing chamber during a process known as "coking". These deposits can "gum up" the bearing and seals, potentially causing damage and affecting engine operation. At approximately 290 °C, the oil reaches its auto-ignition temperature.

One such bearing is located near the high pressure (HP) turbine. The HP core air passage is located proximally to this HP bearing chamber and, in this region of the engine, the HP core air is at a temperature of approximately 450 °C. As such, the HP bearing chamber is in close proximity to a region of the engine far in excess of its optimal operating, coking and auto-ignition temperatures.

Accordingly, it is imperative that a favourable environment is maintained within the bearing chamber, so that bearings and bearing lubricants remain within safe operating parameters.

### Statements of Invention

According to a first aspect of the present invention, there is provided a gas turbine engine having a bearing support structure comprising a bearing chamber; a first buffer fluid passage disposed radially outwardly of the bearing chamber; a second buffer fluid passage disposed radially outwardly of the first buffer fluid passage; and a core fluid passage disposed radially outwardly of the second buffer fluid passage; the bearing chamber, first buffer fluid passage, second buffer fluid passage and core fluid passage being separated by respective hub walls.

Cooling air may be directed through the first and/or second buffer fluid passage during use of the gas turbine.

Air may enter and exit the first and/or second buffer fluid passage by virtue of a plurality of leaking seals which may be located in the hub walls.

The first and/or second buffer fluid passage may have an annular transverse cross section.

The bearing chamber, first buffer fluid passage and second buffer fluid passage may be arranged concentrically around a central axis of the gas turbine.

The hub walls may be manufactured as a single monolithic part.

The hub walls may be manufactured by additive manufacturing.

The bearing support structure may additionally comprise at least one additional buffer fluid passage disposed radially outwardly of the second buffer fluid passage and radially inwardly of the core fluid passage.

The air may be bled from bypass air flow of the gas turbine engine.

The core fluid passage may be the high pressure core air passage of the gas turbine engine.

The gas turbine engine may be used in an aircraft and may further comprise an engine core, a fan and a gearbox. The engine core may comprise a turbine, a compressor and a core shaft connecting the turbine to the compressor. The fan may be located upstream of the engine core, and the fan may comprise a plurality of fan blades. The gearbox may receive an input from the core shaft and may output drive to the fan so as to drive the fan at a lower rotational speed than the core shaft.

The gas turbine engine may further comprise a first turbine, a first compressor, a first core shaft connecting the first turbine to the first compressor; a second turbine, a second compressor, and a second core shaft connecting the second turbine to the second compressor. The second turbine, second compressor, and second core shaft may be arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case. The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of drawings

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a longitudinal cross section of a bearing support structure comprising a bearing chamber; and
Figure 5 is an exemplary temperature profile across the bearing support structure.

### Detailed description

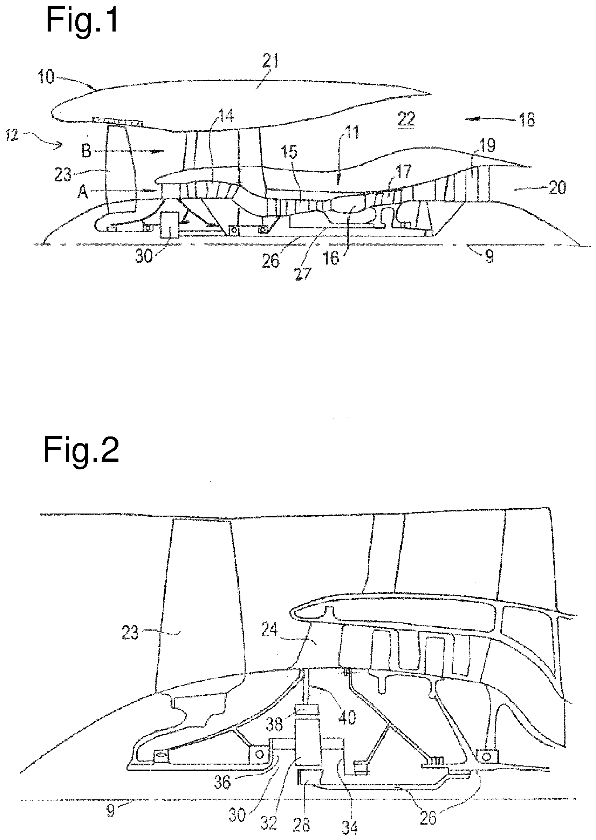

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

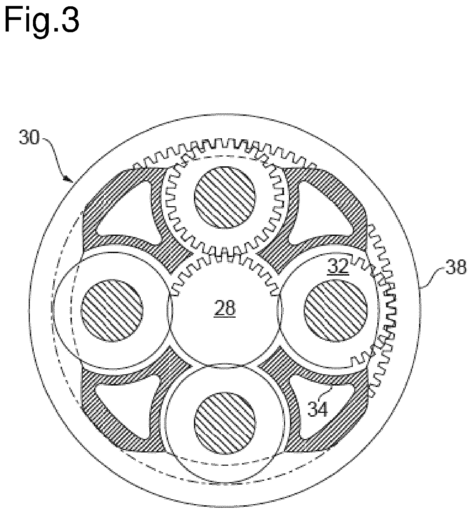

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. an intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate from and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

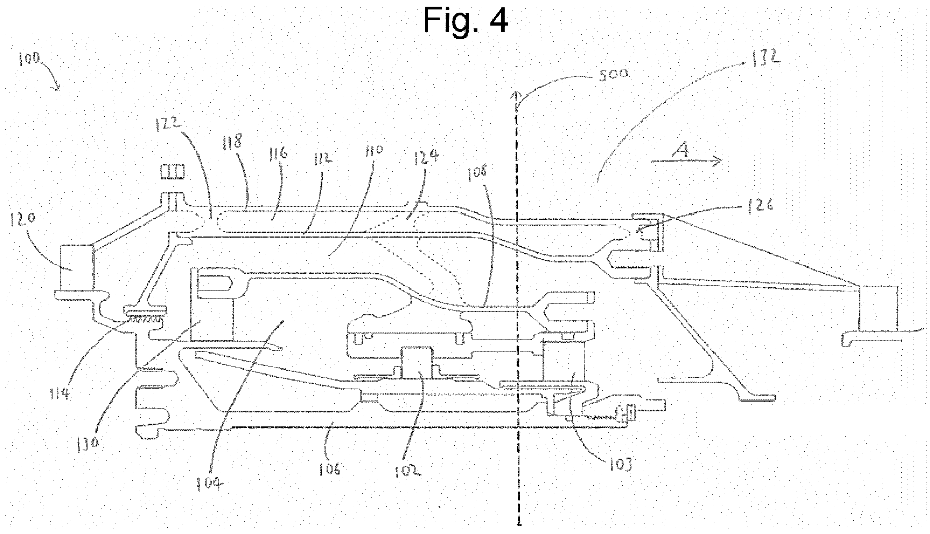

Figure 4 illustrates a bearing support structure 100 in a gas turbine engine. The bearing support structure 100 comprises two fluid buffer passages 110, 116 between the bearing chamber 104 and the core fluid flow A. The bearing support structure 100 houses bearings 102, 103 within the bearing chamber 104. The bearings 102, 103 may be of any suitable type, such as roller bearings, and may use a squeeze film and/or a spring bar. There may be any number of bearings housed within the bearing chamber 104 depending on the particular application. The bearing chamber 104, supports a central drive shaft 106, and contains an oil/air mist in order to create a favourable environment for functioning of the bearings 102, 103. The bearing chamber 104 is defined, at least circumferentially, by an inner hub wall 108 which separates it from the first buffer fluid passage 110. The bearing chamber 104 is additionally bounded by a number of sealing elements, such as those represented symbolically by the boxes 128, 130. These sealing elements may be any suitable seal type, for example, labyrinth seals.

Arranged concentrically about the central shaft 106, and at a greater radius than the bearing chamber 104, is the first buffer fluid passage 110. The first buffer fluid passage 110 has an annular transverse cross section. The first buffer fluid passage 110 is defined at least partially at its outer circumference by a middle hub wall 112, at least partially at its inner circumference by the inner hub wall 108, and additionally by a number of sealing elements. These sealing elements may be of any suitable seal type, for example, labyrinth seals. A multiple-labyrinth seal 114 bounding the first buffer fluid passage is shown in Figure 4.

Arranged concentrically about the central shaft 106, and at a greater radius than both the bearing chamber 104 and the first buffer fluid passage 110 is a second buffer fluid passage 116. The second buffer fluid passage 116 has an annular transverse cross section. The second buffer fluid passage is bounded at least partially at its outer circumference by an outer hub wall 118, at least partially at its inner circumference by the middle hub wall 112, and additionally by a number of sealing elements. One such sealing element bounding the second buffer fluid passage is represented symbolically in Figure 4 as a box 120. The second buffer fluid passage 116 illustrated in the cross section of Figure 4 is interrupted part way along its length by load path supports 122, 124, 126 but in other cross sections would form an uninterrupted, continuous passageway. The load path supports 122, 124, 126 are designed to transmit the radial bearing loads from the bearings 102, 103 to the outer casing of the engine.

The bearing support structure 100 thus comprises three hub walls 108, 112, 118 and two buffer fluid passages 110, 116, all arranged concentrically about the central shaft 106.

Immediately bordering the outer hub wall 118 is the core fluid flow passage 132. This core fluid flow passage 132 may be, for example, the HP core air flow passage, which houses a number of turbine discs (not shown), and directs the HP core air flow A through the engine.

The central shaft 106 may comprise one or both of the first and/or second shafts 26, 27 of the gas turbine engine of Figure 1.

In use, the central shaft 106 and the bearing support structure 100, including the inner, middle and outer hub walls 108, 112, 118, may rotate at different angular velocities relative to one another. For example, the central shaft 106 may rotate whilst the bearing support structure 100 is stationary, or both the central shaft 106 and the bearing support structure 100 rotate at different non-zero angular velocities. The bearings 102, 103 facilitate a rotating connection between the central shaft 106 and the bearing support structure 100.

A necessary condition for correct functioning of the bearings 102, 103 is maintenance of a stable and appropriate environment within the bearing chamber 104. As previously explored, the optimum operating temperature of the oil within the bearing chamber 104 is typically less than 200 °C. During engine operation, however, the HP core fluid flow A located proximally to the bearing chamber may reach temperatures in excess of 450 °C.

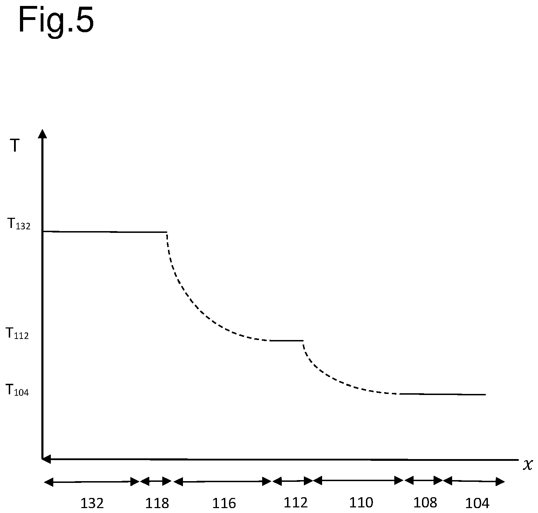

Cooling fluid, such as a component of bypass airflow B, is directed through the second buffer fluid passage 116. This may be as a result of leaking seals (e.g 120). It is noted that these seals may be known to leak during engine operation, and may be deliberately included in the bearing support structure 100 with this purpose in mind. Such seals are separately located longitudinally within the second buffer fluid passage 116, to ensure that fluid passes along the length of the second buffer fluid passage 116. This constant flow of fluid ensures a large transfer of heat to the fluid passing through the second buffer fluid passage 116, rather than to the middle hub wall 112, and consequently not to the first buffer fluid passage 110. This type of heat transfer may be termed *active cooling* and/or *forced convection.* The flow rate of fluid through the second buffer fluid passage is sufficient such that the fluid in the second buffer fluid passage does not remain in the passage long enough to accumulate significant heat from the HP core air flow A, i.e. the second buffer fluid passage is significantly below the 450 °C of the HP core air flow A. As described later, this is shown in Figure 5.

In a similar manner, cooling fluid, such as a component of bypass air flow B, is directed through the first buffer fluid passage 110. This may again be as a result of leaking seals. It is again noted that these seals may be deliberately included in the bearing support structure 100 to provide a cooling air flow. This feature of the first buffer fluid passage 110 further reduces the heat transfer from the HP core air flow A to the bearing chamber 104. The flow rate of fluid through the first buffer fluid passage 110 is sufficient such that the fluid in the first buffer fluid passage 110 does not remain in the passage long enough to accumulate significant heat from the second buffer fluid passage, i.e. the first buffer fluid passage is at a temperature substantially similar to, albeit above, the approx. 200 °C of the HP bearing chamber, and below that of the auto-ignition temperature of 290 °C.

Figure 5 shows an exemplary temperature profile across the bearing support structure 100 when in use. The x-axis represents the position within the bearing support structure 100; the numbers represent the reference numerals of the region intersected by the dotted line 500 in Figure 4, with each region being numbered in accordance with Figure 4 and elsewhere within this disclosure. It is emphasised that the direction of the x-axis is reversed; the distal end of the x-axis represents zero radius, and the proximal end represents increasing radius. The y-axis represents the temperature, wherein the subscript of each T marker indicates the region of the bearing support structure 100 to which this temperature is equal according to the reference numerals used elsewhere within this disclosure.

As shown in Figure 5, the radially outer surface of the outer hub wall 118 may be at approximately the same temperature as the core air flow A. In the case of the HP core air flow, T₁₃₂ will be approx. 450 °C. The air passing through the second buffer fluid passage 116 causes a rapid drop off in temperature with decreasing radius. As such the innermost part of the second buffer fluid passage and middle hub wall 112 reach a temperature of T₁₁₂, which is lower than the auto-ignition point of the oil. In the context of the HP core air flow and the HP bearing chamber, T₁₁₂ is less than 290 °C.

Similarly, the cooling air flow through the first buffer fluid passage 110 allows the temperature to drop to T₁₀₄ at the inner hub wall 108 and the bearing chamber 104, which is within the range of the optimal oil operating temperatures. In the context of the HP core air flow and the HP bearing chamber, T₁₀₄ will be less than 200 °C.

In this way, the second buffer fluid passage 116 assists the first buffer fluid passage 110 in reducing the heat transfer from the HP core air flow A to the bearing chamber 104. The temperature of the bearing chamber 104 is thus maintained at or near the optimum operating temperature of the oil.

Maintaining the oil in the bearing chamber 104 within its optimal temperature range confers significant advantages on the oil system within the engine. Firstly, within the optimum temperature range, the viscosity of the oil is maintained within the optimum viscosity range, allowing faster flow rate and a smaller oil system throughout the engine. As the oil used within the bearing chamber 104 is shared engine-wide, this increases heat exchange rates throughout the whole engine and improves overall engine efficiency. Secondly, avoidance of oil coking reduces the chances of components becoming gummed-up with deposits, preventing oil flow blockages, e.g. in pipes and filters, and reducing fire risks.

In some existing bearing support structures, a failure of an inner hub wall would bring oil from the bearing chamber into contact with air in excess of its auto-ignition point. Thus a single point failure of the inner hub wall could potentially cause engine fires. By contrast, the bearing support structure 100 of the present disclosure has an additional safety benefit; if the inner hub wall 108 were to fail at any point, the oil contained within the bearing chamber 104 would be released into the first buffer fluid passage 110 which is below the auto-ignition point of the oil. As such, the features of the present disclosure reduce the likelihood of engine fires emanating from the bearing chamber 104 and/or its bearing support structure 100 even in the case of structural failure.

A number of sensors may be located within or proximally to the bearing chamber 104 in order to detect if a breach has occurred in the inner hub wall 108. These sensors could be temperature sensors, and may be situated, for example, outside the seals of and downstream of the first and/or second buffer fluid passage to measure the air temperature of the air exiting therefrom. Additionally or alternatively, these sensors may be located such that they sense the properties of any fluids bled overboard.

The first buffer fluid passage 110 may be maintained at a pressure greater than that of the bearing chamber 104, to prevent oil leaking past the seals, such as seals 128, 130. In this way, lubricating oil is retained within the bearing chamber 104.

The bearing support structure 100 of the present disclosure may be manufactured by additive manufacturing. For example, additive manufacturing could be used to produce a monolithic part comprising the inner, outer and middle hubs 108, 112, 118. Seal arms of the sealing elements bounding the buffer fluid passages 110, 116 may be manufactured as part of the same monolithic bearing support structure. Alternatively, the bearing support structure 100 and seals may be manufactured as a number of separate parts, which may then be bolted into an assembly or fabricated into a single component.

It will be understood by the skilled person that the bearing support structure 100 must have sufficient stiffness due to its influence on blade tip clearances and shaft dynamics. As such, bearing support structures and components therein are made from materials that are able to withstand the hostile environment within the engine whilst maintaining sufficient stiffness, e.g. Nickel alloys.

It will additionally be understood by the skilled person that the exact configuration of the load path supports 122, 124, 126 joining the inner, middle and outer hub walls 108, 112, 118 and the external engine casing together can be changed depending on the application of the present invention to provide the aforementioned stiffness, i.e. the location of the load path supports 122, 124, 126 can be adjusted to accommodate the loads being imparted into the structure according to each application of the present invention.

It may be desirable to add further buffer fluid passages and/or hub walls in addition to the first and second buffer fluid passages. Similar to the first and second buffer fluid passages, any additional buffer fluid passages may be located concentrically about the core shaft, may have an annular transverse cross section, and may be at a radius greater than the first and/or second buffer fluid passages. These further buffer fluid passages may be disposed radially outwardly of the second buffer fluid passage and radially inwardly of the core fluid passage 132. These further buffer fluid passages may have cooling fluid, such as a component of bypass air flow B, directed through them as with the first and second buffer fluid passages, and this may again be achieved by use of leaking seals.

Whilst the first, second and further buffer fluid passages have been described in the context of air, it will be understood that any suitable fluid could be used for the purposes of heat transfer within the aforementioned buffer fluid passages.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A gas turbine engine (10) having a bearing support structure (100) comprising:
a bearing chamber (104);
a first buffer fluid passage (110) disposed radially outwardly of the bearing chamber (104);
a second buffer fluid passage (116) disposed radially outwardly of the first buffer fluid passage (110); and
a core fluid passage (132) disposed radially outwardly of the second buffer fluid passage (116); the bearing chamber (104), first buffer fluid passage (110), second buffer fluid passage (116) and core fluid passage (132) being separated by respective hub walls (108, 112, 118).

2. The gas turbine engine (10) of claim 1 wherein cooling air is directed through the first and/or second buffer fluid passage (116) during use of the gas turbine.

3. The gas turbine engine (10) of claim 1 or 2 wherein air enters and exits the first and/or second buffer fluid passage (116) by virtue of a plurality of leaking seals located in the hub walls (108, 112, 118).

4. The gas turbine engine (10) of any preceding claim wherein the first and/or second buffer fluid passage (116) has an annular transverse cross section.

5. The gas turbine engine (10) of any preceding claim wherein the bearing chamber (104), first buffer fluid passage (110) and second buffer fluid passage (116) are arranged concentrically around a central axis of the gas turbine.

6. The gas turbine engine (10) of any preceding claim wherein the hub walls (108, 112, 118) may be manufactured as a single monolithic part.

7. The gas turbine engine (10) of any preceding claim wherein the hub walls (108, 112, 118) may be manufactured by additive manufacturing.

8. The gas turbine engine (10) of any preceding claim wherein the bearing support structure (100) additionally comprises at least one additional buffer fluid passage disposed radially outwardly of the second buffer fluid passage (116) and radially inwardly of the core fluid passage (132).

9. The gas turbine engine (10) of claim 2 or any claim dependent thereon, wherein the cooling air is bled from bypass air flow of the gas turbine engine.

10. The gas turbine engine (10) of any preceding claim wherein the core fluid passage (132) is a high pressure core air passage.

11. The gas turbine engine (10) of any preceding claim for use in an aircraft and further comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft.

12. The gas turbine engine (10) of any preceding claim further comprising:
a first turbine (19), a first compressor (14), a first core shaft (26) connecting the first turbine to the first compressor; and
a second turbine (17), a second compressor (15), and a second core shaft (27) connecting the second turbine to the second compressor;
the second turbine, second compressor, and second core shaft being arranged to rotate at a higher rotational speed than the first core shaft.
